# Europäisches Patentamt
# European Patent Office
# Office européen des brevets

(11) Numéro de publication: **0 142 435**
**B1**

(12)
# FASCICULE DE BREVET EUROPÉEN

(45) Date de publication du fascicule du brevet:
03.02.88

(21) Numéro de dépôt: **84402252.5**

(22) Date de dépôt: **06.11.84**

(51) Int. Cl.⁴: **B 60 J 5/04**

(54) Porte à double paroi et structure de renfort, notamment pour véhicule automobile.

(30) Priorité: **09.11.83 FR 8317815**

(43) Date de publication de la demande:
**22.05.85 Bulletin 85/21**

(45) Mention de la délivrance du brevet:
**03.02.88 Bulletin 88/5**

(84) Etats contractants désignés:
**DE GB IT**

(56) Documents cité:
FR-A-1 002 444
FR-A-1 597 263
GB-A-1 126 345
GB-A-1 226 321

PATENTS ABSTRACTS OF JAPAN, vol. 7, no. 287(M-264) 1432 , 21 décembre 1983; & JP - A - 58 161 612 (TOYO KOGYO K.K.) 26-09-1983

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Vinaty, Emmanuel René, 1 Rue M.J. Bassot, F-92300 Levallois- Perret (FR)**

(74) Mandataire: **Bressand, Georges, c/o CABINET LAVOIX 2 Place d'Estienne d'Orves, F-75441 Paris Cedex 09 (FR)**

## Description

La présente invention a pour objet une porte, notamment mais non exclusivement pour véhicule automobile. Une porte de cet type, connue par le FR-A-1 59 721, est définie dans le préambule de la revendication 1.

Les portes des véhicules automobiles comporten dans leur partie non vitrée, une paroi extérieure pleine, la rigidité en torsion étant assurée soit par un cadre fermé, comme dans le brevet FR-A-1 002 444, soit, comme c'est généralement le cas actuellement, par une seconde paroi intérieure, formant avec la paroi extérieure une sorte de caisson.

L'emploi de matières plastiques dans la fabrication des portes d'automobiles n'a pas, jusqu'à présent modifié sensiblement la conception de ces portes, classiquement réalisées auparavant en tôle d'acier embouti. La paroi extérieure et la paroi intérieure sont fabriquées séparément, l'une des deux au moins comportant un encadrement de liaison, qui crée l'épaisseur de la porte et ménage le volume interne nécessaire aux équipements. Elles sont ensuite collées ou agrafées. Des ajours importants, nécessités par le fait que les parois sont indissociables de construction, sont généralement ménagés dans la paroi intérieure, pour permettre l'accés aux équipements éventuellement contenus dans le volume compris entre les deux parois. Ceci oblige à poser un revêtement intérieur de garniture, constituant en fait une troisième paroi, qui éléve le coût de réalisation de la porte.

On a bien proposé, comme dans le brevet FR-A-1 597 263, de réaliser des portes constituées par un corps formé d'une seule pièce en matière plastique moulée par injection à réaction sur une structure de renfort incorporée lors du moulage. Mais cette technique est d'un coût élevé, ne permet pas des cadences de production importantes et la présence de la structure de renfort dans lle moule complique sérieusement les opérations de moulage. On a aussi proposé, comme dans le brevet GB-A-1 216 321, de fabriquer des portes en matière plastique moulée par extrusion et soufflage, mais de telles portes présentent une tenue nettement insuffisante pour assurer la sécurité et une fiabilité correctes sur un véhicule automobile.

La présente invention a pour but de réaliser une porte pour véhicule automobile à base de matériau plastique, de montage simple, de bonne résistance mécanique et d'un prix de revient réduit. La porte visée par l'invention comprend un corps formé d'une seule pièce en matière plastique et une structure de renfort adaptée au corps, ainsi que des moyens de fixation de la structure sur le corps, ce dernier étant constitué par un caisson creux réalisé en une seule opération de moulage par extrusion et soufflage.

Suivant l'invention, le caisson comporte des bourrelets périphériques délimitant une fente de réception du pied d'un T d'un élément profilé correspondant de la structure de renfort, ou un renflement périphérique venant se loger dans un élément à profil complémentaire de la structure de renfort.

La structure de renfort, rapportée au caisson, concentre les efforts des charnières des serrures et ceux relatifs à la sécurité en cas de collision, lorsque la porte est destinée à équiper un véhicule automobile. Dans ce cas, en outre, des moyens sont naturellement prévus pour fixer les entourages de glaces.

Suivant d'autres particularités de l'invention, le caisson creux forme un volume fermé, et ce volume est rempli d'une mousse à faible densité, telle que du polyuréthane.

Par ailleurs, grâce au fait que le caisson est de préférence monté d'une seule pièce en matière plastique selon la technique d'extrusion-soufflage du corps creux, et ce en une seule opération, on obtient deux parois formant un véritable caisson étanche en supprimant par là même toute opération d'assemblage des flancs entre eux, tout en conservant les avantages propres aux matières plastiques tels que tenue à la corrosion et aux projections de gravillons.

D'autres caractéristiques et avantages de l'invention apparaitront dans la description qui va suivre de formes de réalisations données à titre d'exemples non limitatifs et représentées sur les dessins annexés:

- la Figure 1 est une vue de l'extérieur en perspective d'une porte selon l'invention, destinée à un véhicule automobile;
- la Figure 2 est une vue en perspective éclatée avec arrachement de la structure de renfort de la porte de la Figure 1;
- la Figure 3 est une vue extérieure en élévation du caisson de la porte des Figures 1 et 2;
- la Figure 4 est une vue intérieure en élévation du caisson de la Figure 3;
- les Figures 5, 6, 7 et 8 sont des vues en coupe du caisson de la Figure 4, respectivement suivant V-V, VI-VI. VII-VII et VIII-VIII;
- les Figures 9, 10 et 11 sont des vues en coupe partielle horizontale de trois autres modes de réalisation de la porte selon l'invention:
- la Figure 12 est une vue en coupe analogue aux Figures 7 et 6 d'un cinquième mode de réalisation de la porte selon l'invention.

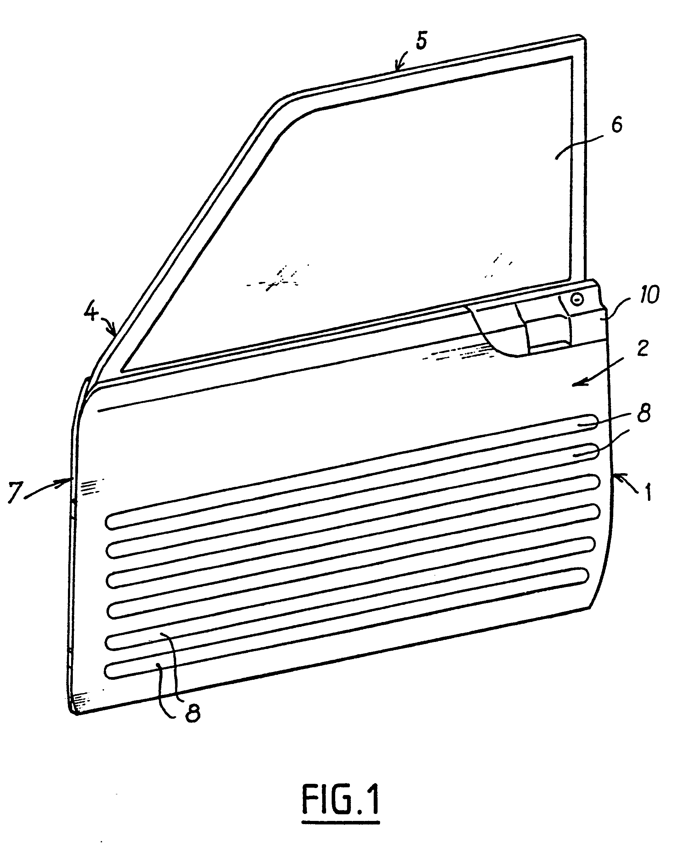

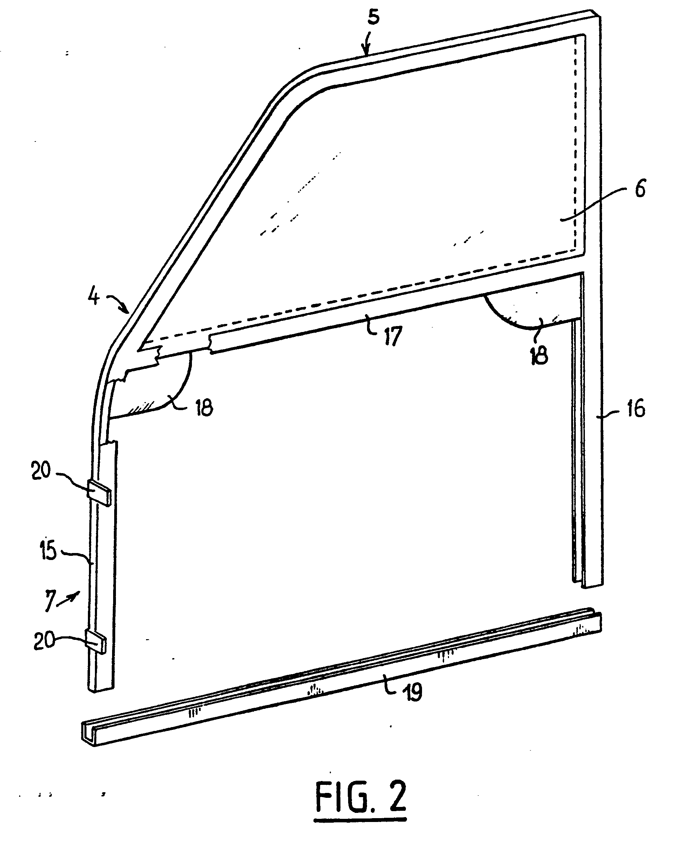

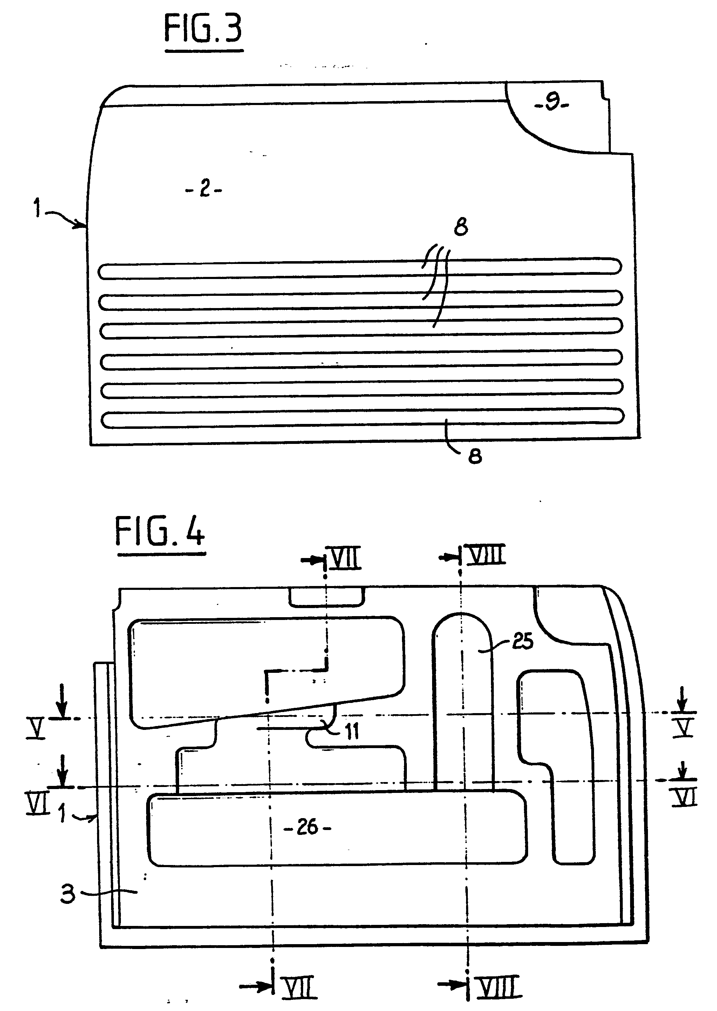

La porte représentée aux Figures 1 à 8 est destinée à équiper un véhicule automobile et elle comprend un corps formé d'une seule pièce en matière plastique, une structure de renfort 4 adaptée au corps, ainsi que des moyens de fixation de la structure 4 sur le corps. Ce dernier est constitué par un caisson creux 1 qui comporte une paroi extérieure 2 et une paroi intérieure 3 espacée et qui délimitent un volume fermé, et une structure de renfort 4, de préférence métallique formant une armature, dont la partie supérieure 5 forme un cadre pour une vitre 6 et la partie inférieure 7 s'encastre sur le pourtour du caisson 1 auquel la structure 4 est donc adaptée, des moyens de fixation de la structure 4 au caisson 1 étant prévus.

Le caisson 1 est moulé d'une pièce en une seule opération de moulage par extrusion et soufflage d'une matière plastique telle que polyéthylène ou chlorure de polyvinyle.

Le volume intérieur au caisson peut être rempli d'une mousse à faible densité telle que du polyuréthane, ou bien laissé vide.

Des rainures horizontales 8 sont moulées sur la paroi 2 extérieure à l'habitacle du véhicule pour la raidir et la décorer. Un logement 9 est ménagé dans un coin de cette paroi 2 pour recevoir une poignée 10 de manoeuvre de la porte.

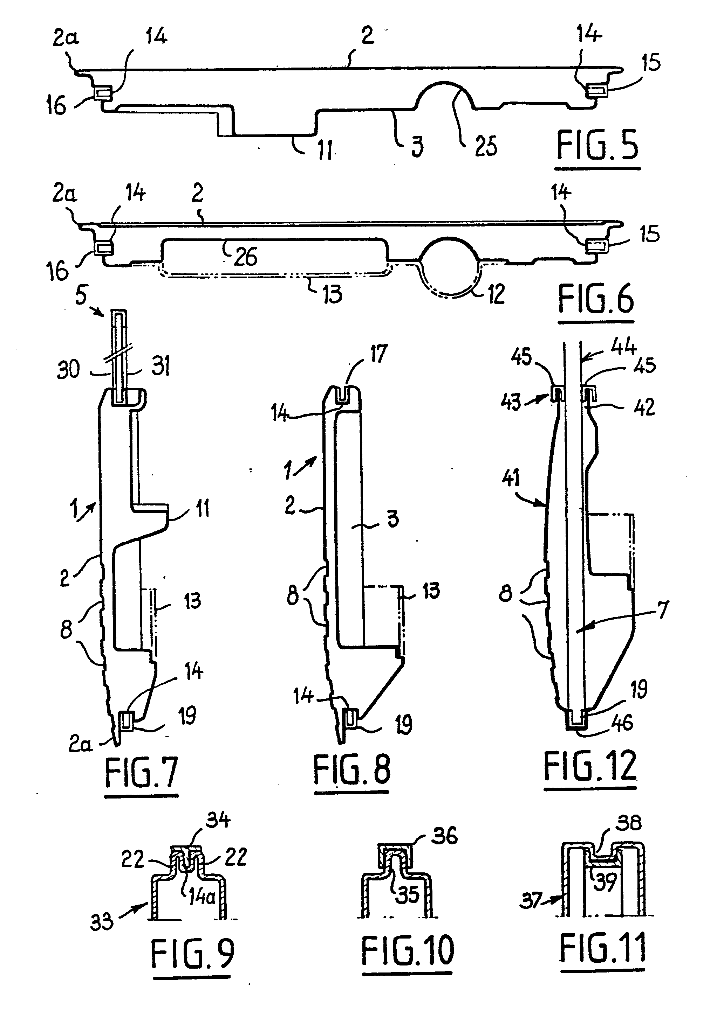

De même, sur la paroi intérieure 3, un accoudoir 11 est moulé saillant vers l'intérieur de l'habitacle, et des logements sont prévus pour recevoir un cendrier 12 ainsi qu'un vide-poche 13, représentés en traite mixtes sur la Figure 6.

Le pourtour du caisson 1 est profilé pour permettre l'encastrement dans celui-ci de la partie inférieure ou cadre 7 de la structure de renfort 4.

Dans le mode de réalisation représenté sur les Figures 1 à 8, le caisson est hermétiquement clos, et ses deux côtés ainsi que ses bords supérieur et inférieur présentent une rainure 14 à profil en U, dans laquelle peuvent venir s'encastrer deux montants profilée 15, 16 correspondants et la traverse supérieure 17 du cadre 7. Cachant cette rainure 14 à la vue du côté extérieur de l'habitacle, une partie saillante 2a entoure la paroi extérieure 2.

La traverse horizontale 17, profilée en U, constitue l'élément inférieur du cadre 5 entourant la vitre 6 et des goussets 18 supportant les mécanismes d'ouverture et de fermeture de la porte, le cadre 5 présentant des rainures intérieures de réception de la vitre 6.

Complémentairement, la structure 4 comporte une traveree inférieure 19 amovible et à profil en U comme les montants 15, 16, dont elle peut relier les extrémités inferieures.

Le montant 15 porte des pattes 20 de support de charnières non représentées.

Le montage de la porte s'exécute comme suit; on fait glisser le caisson 1 entre les montants 15 et 16 jusqu'à ce que la partie inférieure de la traverse 17 s'encastre dans la rainure 14 entourant le caisson 4.

A son tour, la traverse 19 est alors encastrée dans la partie inférieure de la rainure 14, et on fixe par tout moyen connu approprié (non représenté) ses extrémités aux extrémités inférieures des montants 15 et 16. Le caisson 1 se trouve ainsi emprisonné dans la structure 4, qui est invisible de l'extérieur du véhicule (sauf évidemment le cadre supérieur 5), grâce au bord saillant 2a de la paroi 2 de la porte du véhicule.

La vitre fixe 6 peut être remplacée par des vitres coulissantes horizontalement 30, 31 (Figure 7) montées de façon connues en soi.

La porte obtenue est économique et de montage simple.

Le remplissage éventuel du caisson 1 avec une mousse de polyuréthane par exemple, améliore ses qualités isolantes.

Dans une première variante de réalisation (Figure 9), le caisson 33 comporte sur son pourtour deux bourrelets 22 adjacents délimitant entre eux une rainure périphérique 14a bordant le caisson. Les éléments de l'armature inférieure de la structure de renfort tels que 34 ont alors un profil en T conjugué, permettant d'introduire le pied du T dans la rainure 14a. Le montage de la porte se fait de façon analogue à celui de la forme de réalisation decrite précédemment.

Dans une seconde variante de réalisation (Figure 10), la rainure 14 est remplacée par un renflement périphérique saillant 35 arrondi, qui vient se loger dans l'élément correspondant 36 profilé en U du cadre de la structure de renfort.

Dans la variante de la Figure 11, le caisson 37 comporte une gorge ou fente périphérique 38 en U, en saillie vers l'intérieur du caisson, et qui peut venir se loger dans un montant 39 conjugué en U de la structure de renfort, qui se trouve alors placée intérieurement au caisson 37.

Dans la variante de la Figure 12, le caisson 41 présente le long de son bord supérieur, une ouverture ou fente 42 par laquelle la structure 44 peut être glissée à l'intérieur du caisson 41. La structure 44 comporte une traverse horizontale constituée de deux profilés 45 en U renversés, adaptés pour coiffer les bords de la fente 42.

La traverse inférieure 19 est préalablement assemblée aux montants 15 et 16 du cadre 7, ainsi qu'un mécanisme éventuel de lève-vitre. Puis l'ensemble est enfilé dans le caisson 41 et les profilée 45 en U viennent coiffer les borde de la fente 42, la traverse 19 venant se loger dans la base conjuguée en U 46 du caisson 41.

On notera que la fente 42 laisse la possibilité de monter dans la porte une glace escamotable verticalement, contrairement aux réalisations précédentes.

Divers moyens connus en soi de liaison entre la structure (4, 44) et le caisson (1, 33, 37, 41) sont envisageables, par exemple collage, agrafage, vissage, combinés ou non, entre eux et/ou avec l'encastrement.

**Revendications**

1. Porte, notamment pour véhicule automobile, comprenant un corps formé d'une seule pièce en matière plastique et une structure de renfort (4), adaptée au corps, ainsi que dee moyens de fixation de la structure (4) sur le corps, ce dernier étant constitué par un caisson creux (1) réalisé en une seule opération de moulage par extrusion et soufflage, caractérisée en ce que le caisson (33) comporte des bourrelets périphériquee (22) délimitant une fente (14a) de réception du pied d'un T d'un élément profilé (34) correspondant de la structure de renfort, ou un renflement périphérique (35) venant se loger dans un élément (36) à profil complémentaire de la structure de renfort.

2. Porte suivant la revendication 1, caractérisée en ce que le caisson creux forme un volume fermé.

3. Porte suivant la revendication 2, caractérisée en ce que le volume intérieur du caisson est rempli d'une mousse à faible densité telle que du polyuréthane.

4. Porte suivant la revendication 1, caractérisée en ce que le caisson (41) présente, le long de son bord supérieur, une ouverture (42) par laquelle la structure (44) peut être glissée à l'intérieur du caisson (41).

5. Porte suivant la revendication 4, caractérisée en ce que le caisson (37) comporte une fente ou gorge périphérique (38) en U, en saillie vers l'intérieur du caisson (37), et qui peut venir se loger dans un montant (39) conjugué de la structure de renfort, qui se trouve placée intérieurement au caisson (37).

6. Porte selon la revendication 5, caractérisée en ce que la structure (44) comporte une traverse horizontale constituée de deux profilés (45) en U, pouvant venir coiffer les bords de l'ouverture (42).


**Patentansprüche**

1. Tür, insbesondere für Kraftfahrzauge, welche einen einstückig aus Kunststoff ausgebildeten Körper und einen an den Körper angepaßten Verstärkungsaufbau (4) sowie Mittel zur Befestigung das Aufbaus (4) an dem Körper umfaßt, wobei, letzterer durch einen in einem einzigen Extrusions- und Blasformungsvorgang hergestellten Hohlkasten (1) gebildet ist, dadurch gekennzeichnet, daß der Kasten (33) Umfangswülste (22), welche einen Schlitz (14a) zur Aufnahme des Fußes eines T eines entsprechenden Profilteils (34) des Verstärkungsaufbaus begrenzen, oder eine Umfangsausbauchung (35), welche in einem komplementären Profilteil (36) des Verstärkungsaufbaus zu liegen kommt, aufweist.

2. Tür nach Anspruch 1, dadurch gekennzeichnst, daß der Hohlkasten einen abgeschlossenen Raum bildet.

3. Tür nach Anspruch 2, dadurch gekennzeichnet, daß der Innenraum des Kastens mit einem Schaum geringer Dichte, wie Polyurethan, gefüllt ist.

4. Tür nach Anspruch 1, dadurch gekennzeichnet, daß der Kasten (41) längs seines oberen Randes eien Öffnung (42) aufweist, durch welche der Aufbau (44) ins Innere des Kastens (41) geschoben werden kann.

5. Tür nach Anspruch 4, dadurch gekennzeichnet, daß der Kasten (37) ins Innere des Kastens (37) vorspringend einen umfänglichen U-förmigen Schlitz bzw. Nut (38) aufweist, der bzw. die in einer zugeordneten Stütze (39) des Verstärkungsaufbas zu liegen kommt, welche sich im Inneren des Kastens (37) befindet.

6. Tür nach Anspruch 5, dadurch gekennzeichnet, daß der Aufbau (44) eine aus zwei U-Profilen (45) gebildete horizontale Querleiste aufweist, welche sich über die Ränder der Öffnung (42) legen kann.


**Claims**

1. A door in particular for an automobile vehicle, comprising a body formed in a single piece from a plastics material, and a reinforcing structure (4) adapted to the body, and means for fixing the structure (4) to the body, the latter being constituted by a hollow box (1) made in a single moulding operation by extrusion and blowing, characterised inthat the box (33) comprises peripheral beadings (22) defining a slot (14a) for receiving the foot of a T of a section element (34) corresponding to the reinforcing structure, or a peripheral boss (35) which is engaged in an element (36) having a complementary profile of the reinforcing structure.

2. A door according to claim 1, characterised in that the hollow box forms a closed volume.

3. A door according to claim 2, characterised in that the interior volume of the box is filled with a foam of low density such as polyurethane.

4. A door according to claim 1, characterised in that box (41) has, along its upper edge, an opening (42) through which the structure (44) may be slid inside the box (41).

5. A door according to claim 4, characterised in that the box (37) has a U-shaped peripheral slot or groove (38) which projects toward the interior of the box (37) and which is engageable in a conjugate post (39) of the reinforcing structure, which is placed inside the box (37).

6. A door according to claim 5, characterised in that the structure (44) comprises a horizontal transverse part constituted by two U-section members (45) which are capable of capping the edges of the opening (42).

## FIG.1

FIG. 2

## FIG.3

## FIG.4

FIG.5

FIG.6

FIG.7

FIG.8

FIG.12

FIG.9

FIG.10

FIG.11